# EUROPEAN PATENT APPLICATION

(11) **EP 4 438 320 A1**
(43) Date of publication of application: **02.10.2024**
(21) Application number: 22931887.8
(22) Date of filing: 26.12.2022
(51) Int. Cl.: B44C 5/04, B44F 1/14, B44F 1/02, H04M 1/02

(54) **GLITTER MEMBER AND ELECTRONIC PRODUCT**

(30) Priority: 17.03.2022 CN 202220594546 U
(71) Applicant: BYD Company Limited, Shenzhen, Guangdong 518118 (CN)
(72) Inventor: YUAN, Sun, Shenzhen, Guangdong 518118 (CN); ZHANG, Aodong, Shenzhen, Guangdong 518118 (CN); ZHAO, Lihong, Shenzhen, Guangdong 518118 (CN); LUO, Wenhai, Shenzhen, Guangdong 518118 (CN)
(74) Representative: Arnold & Siedsma
(86) International application number: PCT/CN2022/142062
(87) International publication number: WO 2023/173881

(57) **Abstract**

A glitter module and an electronic product are provided. The glitter module includes a base material and a reflective graphic located on a surface of the base material. The reflective graphic includes multiple first-level regions. Each first-level region has multiple second-level regions. The second-level region is provided with a plurality of strip-shaped grooves. Each first-level region has a specified direction. An angle between an extension direction of a strip-shaped groove of a plurality of second-level regions in a same first-level region and a specified direction of a corresponding first-level region ranges from -20° to 20°. Along a preset direction of the reflective graphic, angles between specified directions of the plurality of first-level regions and the preset direction are in a gradient change relationship.

## Description

### CROSS-REFERENCE TO RELATED APPLICATIONS

The present disclosure claims priority to and benefits of Chinese Patent Application No. 202220594546.4, filed on March 17, 2022, and entitled "GLITTER MODULE AND ELECTRONIC PRODUCT", which is incorporated herein by reference in its entirety.

### FIELD

The present disclosure relates to the field of reflective graphic technologies, and more specifically, to a glitter module and an electronic product.

### BACKGROUND

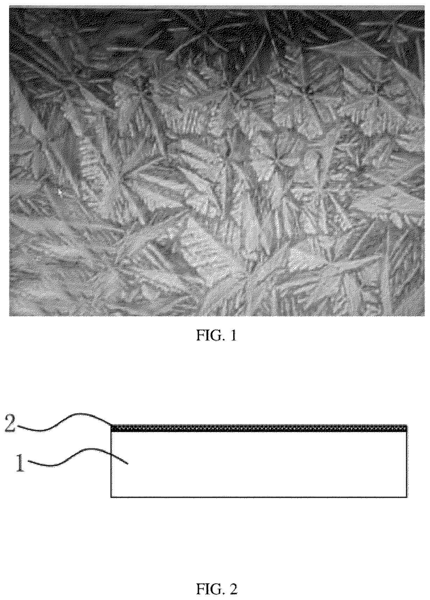

At present, a glittering sand texture effect is generally achieved by using an anti-glareglass (AG) potion to etch a base material such as glass, or by performing inkjet printing on a surface of the base material, to form multiple irregular polyhedral cone crystal structures on the surface of the base material (as shown in FIG. 1). Under irradiation of light, different surfaces of a polyhedral cone reflect and scatter light to form a sparkling glittering sand effect. However, a polyhedral structure formed in this manner is completely random, and a flashing effect does not have a gradient change feature or a flowing effect, resulting in monotonous perception.

### SUMMARY

For a problem that a current glittering sand texture effect formed by using a polyhedral cone does not have a gradient change feature or a flowing effect, the present disclosure provides a glitter module and an electronic product.

A technical solution used by the present disclosure to solve the above technical problem is as follows:

On one hand, the present disclosure provides a glitter module. The glitter module includes a base material and a reflective graphic located on a surface of the base material. The reflective graphic includes multiple first-level regions. Each first-level region has multiple second-level regions.

The second-level region is provided with multiple strip-shaped grooves. Multiple strip-shaped grooves in a same second-level region are arranged in parallel. The multiple strip-shaped grooves in the same second-level region have a same extension direction.

Each first-level region has a specified direction. An angle between an extension direction of a strip-shaped groove of multiple second-level regions in a same first-level region and a specified direction of a corresponding first-level region ranges from -20° to 20°.

Along a preset direction of the reflective graphic, angles between specified directions of the multiple first-level regions and the preset direction are in a gradient change relationship.

According to an embodiment of the present disclosure, the angle between the extension direction of the strip-shaped groove of the multiple second-level regions in the same first-level region and the specified direction of the corresponding first-level region ranges from - 15° to 15°.

According to an embodiment of the present disclosure, along the preset direction of the reflective graphic, the angles between the specified directions of the multiple first-level regions and the preset direction are in a gradient change between 90° and -90°.

According to an embodiment of the present disclosure, the first-level region is in a shape of an irregular polygon.

According to an embodiment of the present disclosure, the second-level region is in a shape of an irregular polygon or a triangle.

According to an embodiment of the present disclosure, in the same first-level region, the multiple second-level regions are in puzzle-like splicing distribution or dot matrix spacing distribution.

According to an embodiment of the present disclosure, a spacing between the multiple strip-shaped grooves in the same second-level region ranges from 0 µm to 50 µm. A width of the strip-shaped groove ranges from 10 µm to 50 µm. A depth of the strip-shaped groove ranges from 0.5 µm to 10 µm.

According to an embodiment of the present disclosure, the second-level region is provided with multiple strip-shaped protrusions. The multiple strip-shaped protrusions are arranged in parallel. A single strip-shaped groove is formed between two adjacent strip-shaped protrusions. A width of the strip-shaped protrusion ranges from 10 µm to 50 µm. A height of the strip-shaped protrusion ranges from 0.5 µm to 10 µm. A spacing between the two adjacent strip-shaped protrusions ranges from 0 µm to 50 µm.

According to an embodiment of the present disclosure, the base material is selected from a glass substrate or a plastic sheet.

On the other hand, the present disclosure provides an electronic product, including the glitter module described above.

The glitter module according to the present disclosure is provided with multiple first-level regions. In addition, the first-level region is further provided with multiple second-level regions. In the second-level region, multiple strip-shaped grooves are arranged to form a raster image. When the raster image is at different angles to an incident ray and an observer's perspective, different reflective effects can be presented. The reflective effect of the raster image is related to an extension direction of the strip-shaped groove of the raster image. By controlling an angle between an extension direction of a strip-shaped groove of different second-level regions and a specified direction of the first-level region to change between -20° and 20°, a difference in extension directions of the strip-shaped grooves between the multiple second-level regions in a single first-level region is caused. In this way, the multiple second-level regions in the single first-level region have different reflective effects, and a glittering effect is formed when observation is performed from a same perspective. In the present disclosure, by regulating angles of specified directions of the multiple first-level regions along a preset direction of the reflective graphic to be in a gradient change relationship, a raster reflection feature between the multiple first-level regions is in a gradient change relationship. When the reflective graphic is observed from a same perspective, a gradient change feature of a light and shade gradient change may be seen. When the glitter module is rotated or an observing perspective is changed, a gradient change reflective effect of the reflective graphic may further have a continuous flowing feature, to achieve a shining effect with a flowing feature and enrich an appearance visual effect.

### BRIEF DESCRIPTION OF THE DRAWINGS

FIG. 1 is a microscopic view of an existing polyhedral cone with a glittering sand texture;
FIG. 2 is a structural diagram of a glitter module according to an embodiment of the present disclosure;
FIG. 3 is a reflective effect view of a glitter module according to an embodiment of the present disclosure;
FIG. 4 is an enlarged diagram of a part 21a in FIG. 3;
FIG. 5 is an enlarged diagram of a part 21b in FIG. 4;
FIG. 6 is an enlarged diagram of a part 21c in FIG. 5;
FIG. 7 is a principle view of a glitter module according to an embodiment of the present disclosure;
FIG. 8 is a shape diagram of a second-level region of a glitter module according to an embodiment of the present disclosure;
FIG. 9 is a cross-sectional diagram of a second-level region of a glitter module according to an embodiment of the present disclosure;
FIG. 10 a cross-sectional diagram of a second-level region of a glitter module according to another embodiment of the present disclosure;
FIG. 11 is a cross-sectional diagram of a second-level region of a glitter module according to still another embodiment of the present disclosure;
FIG. 12 is a cross-sectional diagram of a second-level region of a glitter module according to yet another embodiment of the present disclosure; and
FIG. 13 is a cross-sectional diagram of a second-level region of a glitter module according to still yet another embodiment of the present disclosure.

Reference numerals of the accompanying drawings of the specification are as follows:
1. base material; 2. reflective graphic; 21. first-level region; 21a. first-level region; 21b. first-level region; 21c. first-level region; 2111. strip-shaped groove; and 2112. strip-shaped protrusion.

### DETAILED DESCRIPTION

To make technical problems resolved by the present disclosure, technical solutions, and beneficial effects more comprehensible, the following further describes the present disclosure in detail with reference to the accompanying drawings and embodiments. It should be understood that a specific embodiment described herein is used to explain the present disclosure only and is not intended to limit the present disclosure.

In the descriptions of the present disclosure, unless otherwise stated, "multiple" means two or more than two.

In the descriptions of the present disclosure, the term "extension direction" means an orientation direction of a strip-shaped groove, and is merely used to embody a location of the strip-shaped groove. For example, in a general situation, for a strip-shaped object, a length direction of the object may be defined as an extension direction of the object.

In the descriptions of the present disclosure, the term "specified direction" is a human-defined direction. During graphic designing, a "specified direction" of a first-level region is first determined. Because an angle between an extension direction of a strip-shaped groove of multiple second-level regions in a same first-level region and a specified direction of a corresponding first-level region ranges from -20° to 20°, an orientation range of the "extension direction" of the strip-shaped groove may be determined based on the "specified direction" of the first-level region. In addition, the "specified direction" of the first-level region may be reversely deduced based on the "extension direction" of the strip-shaped groove in each second-level region. For example, the extension direction of the strip-shaped groove of the multiple second-level regions in the same first-level region changes within a specific angle range. Two second-level regions where extension directions of strip-shaped grooves form a largest angle are found out, and an angle bisector of the angle is used as the "specified direction" of the first-level region.

In the descriptions of the present disclosure, the term "preset direction" is a human-defined direction, and is a basis for determining the "specified direction" of the first-level region. Specifically, a gradient change direction of a required reflective graphic is used as the "preset direction". In other words, along the "preset direction", the reflective graphic presents a light and shade gradient change.

In the descriptions of the present disclosure, the term "gradient change relationship" is used to indicate a change relationship of an angle between the specified direction of the multiple first-level regions and the preset direction, and means that in multiple first-level regions distributed along the preset direction, the angle between the specified direction of the first-level region and the preset direction gradually increases or gradually decreases. For example, along the preset direction, the angle between the specified direction of the first-level region and the preset direction is respectively 0°, 20°, 40°, 60° ..., that is, progressively increases.

As shown in FIG. 2 to FIG. 6, an embodiment of the present disclosure provides a glitter module, including a base material 1 and a reflective graphic 2 located on a surface of the base material 1. The reflective graphic 2 includes multiple first-level regions 21. Each first-level region 21 has multiple second-level regions 211.

The second-level region 211 is provided with multiple strip-shaped grooves 2111. Multiple strip-shaped grooves 2111 in a same second-level region 211 are arranged in parallel. The multiple strip-shaped grooves 2111 in the same second-level region 211 have a same extension direction.

Each first-level region 21 has a specified direction. An angle between an extension direction of a strip-shaped groove 2111 of multiple second-level regions 211 in a same first-level region 21 and a specified direction of a corresponding first-level region 21 ranges from - 20° to 20°.

Along a preset direction of the reflective graphic 2, angles between specified directions of the multiple first-level regions 21 and the preset direction are in a gradient change relationship.

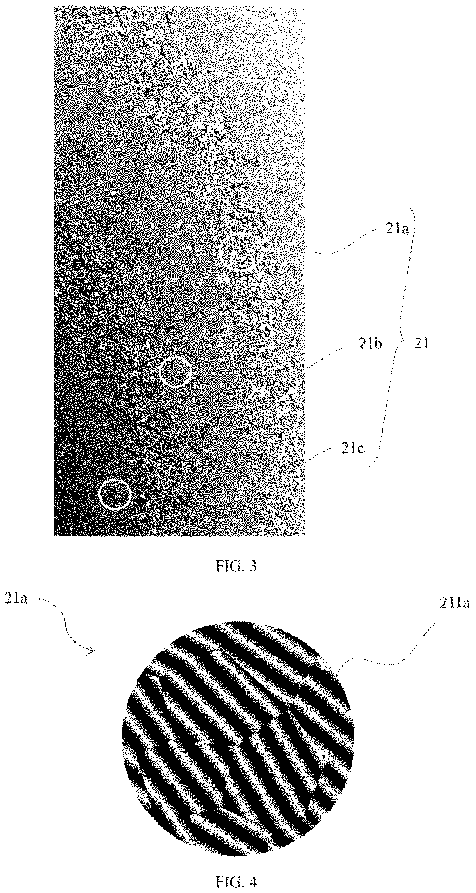

As shown in FIG. 2 and FIG. 3, the glitter module is provided with multiple first-level regions 21. In addition, the first-level region 21 is further provided with multiple second-level regions 211. In the second-level region 211, multiple strip-shaped grooves 2111 are arranged to form a raster image. When the raster image is at different angles to an incident ray and an observer's perspective, different reflective effects can be presented. The reflective effect of the raster image is related to an extension direction of the strip-shaped groove 2111 of the raster image. By controlling an angle between an extension direction of a strip-shaped groove 2111 of different second-level regions 211 and a specified direction of the first-level region 21 to change between -20° and 20°, a difference in extension directions of the strip-shaped grooves 2111 between the multiple second-level regions 211 in a single first-level region 21 is caused. In this way, the multiple second-level regions 211 in the single first-level region 21 have different reflective effects, and a glittering effect is formed when observation is performed from a same perspective.

In the present disclosure, by regulating angles of specified directions of the multiple first-level regions 21 along a preset direction of the reflective graphic 2 to be in a gradient change relationship, a raster reflection feature between the multiple first-level regions 21 is in a gradient change relationship. When the reflective graphic 2 is observed from a same perspective, a gradient change feature of a light and shade gradient change may be seen. When the glitter module is rotated or an observing perspective is changed, a gradient change reflective effect of the reflective graphic 2 may further have a continuous flowing feature, to achieve a shining effect with a flowing feature and enrich an appearance visual effect.

Specifically, as shown in FIG. 3 to FIG. 6, in a specific embodiment, a direction from a lower left corner to an upper right corner in the figure is used as the preset direction of the reflective graphic 2. Along the preset direction of the reflective graphic 2, a first-level region 21c, a first-level region 21b, and a first-level region 21a are selected. It can be learned from FIG. 4 to FIG. 6 that the first-level region 21a have multiple second-level regions 211a. A specified direction of the first-level region 21a can be learned from an extension direction of a strip-shaped groove of the multiple second-level regions 211a. The first-level region 21b has multiple second-level regions 211b. A specified direction of the first-level region 21b can be learned from an extension direction of a strip-shaped groove of the multiple second-level regions 211b. The first-level region 21c has multiple second-level regions 211c. A specified direction of the first-level region 21c can be learned from an extension direction of a strip-shaped groove of the multiple second-level regions 211c. In addition, along the preset direction of the reflective graphic 2, an angle between the preset direction of the reflective graphic 2 and the specified direction of the first-level region 21c, an angle between the preset direction of the reflective graphic 2 and the specified direction of the first-level region 21b, and an angle between the preset direction of the reflective graphic 2 and the specified direction of the first-level region 21a gradually increase.

In an embodiment, the angle between the extension direction of the strip-shaped groove 2111 of the multiple second-level regions 211 in the same first-level region 21 and the specified direction of the corresponding first-level region 21 ranges from -15° to 15°.

In an embodiment, the angle between the extension direction of the strip-shaped groove 2111 of the multiple second-level regions 211 in the same first-level region 21 and the specified direction of the corresponding first-level region 21 ranges from -10° to 10°.

When the angle between the extension direction of the strip-shaped groove 2111 of the second-level region 211 and the specified direction of the corresponding first-level region 21 is within the foregoing range, it can be ensured that a single first-level region 21 can present a glittering effect. This also avoids a problem that an angle range is too large and causes reflective effects of different first-level regions 21 to be not obvious, and further affects a glittering gradient change effect and a reflective flowing feature.

In some embodiments, along the preset direction of the reflective graphic 2, the angles between the specified directions of the multiple first-level regions 21 and the preset direction are in a gradient change between 90° and -90°.

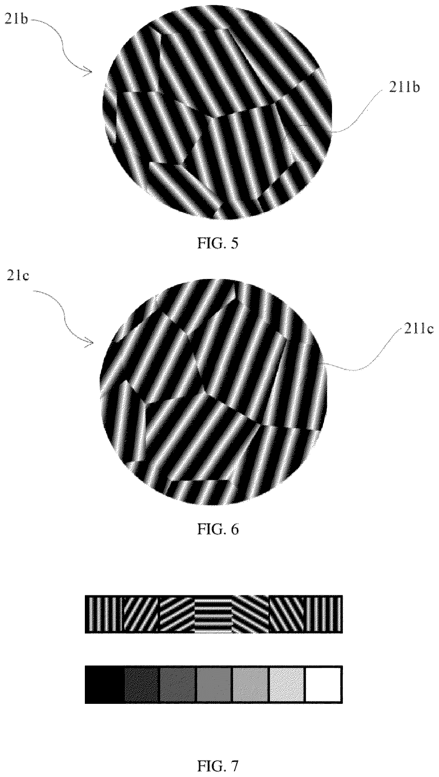

FIG. 7 is a simplified principle view. A single second-level region 211 indicates a corresponding first-level region 21. An extension direction of a strip-shaped groove 2111 of the second-level region 211 indicates a specified direction of the first-level region 21. It can be learned that at a head end of a preset direction of the reflective graphic 2, an angle between the specified direction of the first-level region 21 and the preset direction is 90°. In a middle position, the angle between the specified direction of the first-level region 21 and the preset direction progressively decreases to 0°. At a tail end of the preset direction, the angle between the specified direction of the first-level region 21 and the preset direction progressively decreases to -90°. In this case, a reflective effect of a corresponding glitter module is as shown in FIG. 3. The reflective graphic 2 presents a gradient change effect from dark to bright from a lower left corner to an upper right corner. When the glitter module is rotated, a position of the gradient change effect moves.

It should be noted that the foregoing is merely an embodiment of the present disclosure. In another embodiment, along the preset direction of the reflective graphic 2, angles between the specified directions of the multiple first-level regions 21 and the preset direction may be in a gradient change in another angle range. Alternatively, along the preset direction of the reflective graphic 2, the angles between the specified direction of the multiple first-level regions 21 and the preset direction may be in a gradient change between 90° and -90°, and repeat in cycles, to achieve a multi-section gradient change effect along the preset direction of the reflective graphic 2.

In an embodiment, the first-level region 21 is in a shape of an irregular polygon.

In another embodiment, the first-level region 21 may alternatively be in a shape of a regular polygon such as a square or a triangle.

In an embodiment, to ensure continuity of a gradient change effect, the multiple first-level regions 21 are in puzzle-like splicing distribution.

As shown in FIG. 4, in an embodiment, the second-level region 211 is in a shape of an irregular polygon.

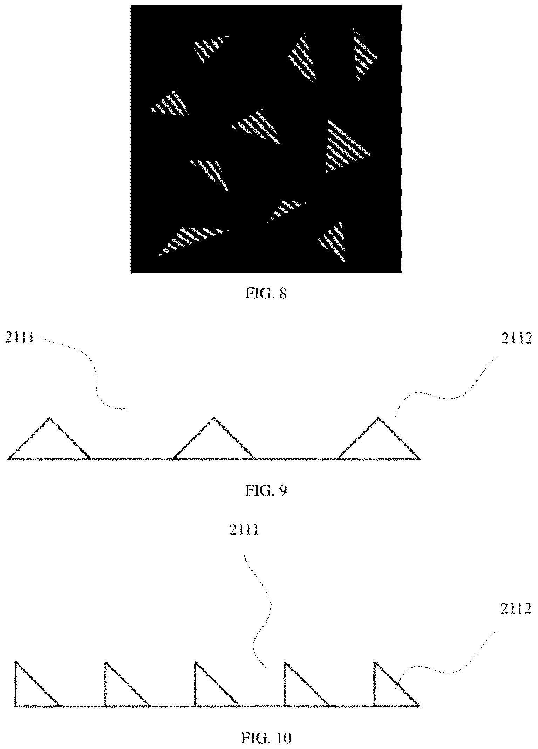

As shown in FIG. 8, in an embodiment, the second-level region 211 is in a shape of a triangle.

In another embodiment, the second-level region 211 may alternatively be set as in another regular shape or another irregular shape.

As shown in FIG. 4, in an embodiment, in a same first-level region 21, multiple second-level regions 211 are in puzzle-like splicing distribution.

The multiple second-level regions 211 in puzzle-like splicing distribution may improve a light and shade gradient change effect and continuity of light and shadow flow at different angles.

As shown in FIG. 8, in a same first-level region 21, multiple second-level regions 211 are in dot matrix spacing distribution.

The multiple second-level regions 211 in dot matrix spacing distribution allows a gap between adjacent second-level regions 211. In this way, a flashing effect is more obvious, but comparatively, a gradient change effect and a continuous flowing effect are weakened.

In some embodiments, a spacing between the multiple strip-shaped grooves 2111 in the same second-level region 211 ranges from 0 µm to 50 µm. A width of the strip-shaped groove 2111 ranges from 10 µm to 50 µm. A depth of the strip-shaped groove 2111 ranges from 0.5 µm to 10 µm.

In some embodiments, the second-level region 211 is provided with multiple strip-shaped protrusions 2112. The multiple strip-shaped protrusions 2112 are arranged in parallel. A single strip-shaped groove 2111 is formed between two adjacent strip-shaped protrusions 2112. A width of the strip-shaped protrusion 2112 ranges from 10 µm to 50 µm. A height of the strip-shaped protrusion 2112 ranges from 0.5 µm to 10 µm. A spacing between the two adjacent strip-shaped protrusions 2112 ranges from 0 µm to 50 µm.

In different embodiments, cross sections and spacings of the multiple strip-shaped protrusions 2112 in the second-level region 211 may be designed differently.

For example, as shown in FIG. 9, in an embodiment, a cross section of a strip-shaped protrusion 2112 is in a shape of an equilateral triangle, and multiple strip-shaped protrusions 2112 are arranged spaced away.

As shown in FIG. 10, in an embodiment, a cross section of a strip-shaped protrusion 2112 is in a shape of a right triangle, and multiple strip-shaped protrusions 2112 are arranged spaced away.

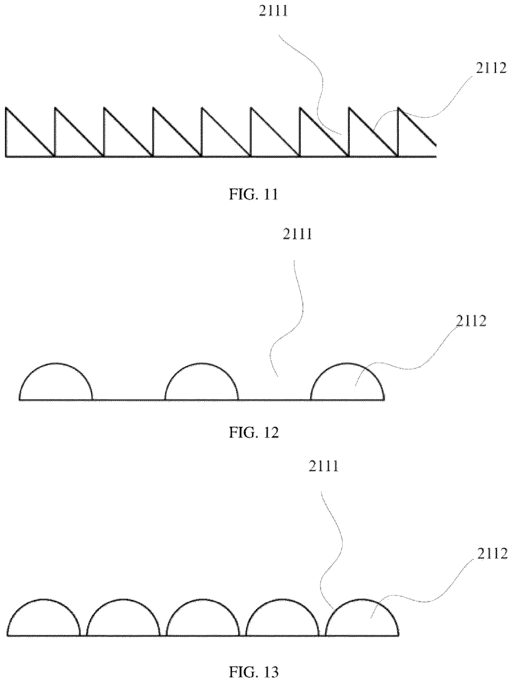

As shown in FIG. 11, in an embodiment, a cross section of a strip-shaped protrusion 2112 is in a shape of a right triangle, and multiple strip-shaped protrusions 2112 are arranged adjacently. Between two adjacent strip-shaped protrusions 2112, a strip-shaped groove 2111 is formed between a right-angled surface of one strip-shaped protrusion 2112 and an inclined surface of the other strip-shaped protrusion 2112.

As shown in FIG. 12, in an embodiment, a cross section of a strip-shaped protrusion 2112 is in a shape of a semicircle, and multiple strip-shaped protrusions 2112 are arranged spaced away.

As shown in FIG. 13, in an embodiment, a cross section of a strip-shaped protrusion 2112 is in a shape of a semicircle, and multiple strip-shaped protrusions 2112 are arranged adjacently. A strip-shaped groove 2111 is formed between side surfaces of two adjacent strip-shaped protrusions 2112.

In some embodiments, the base material 1 is selected from a plate structure, a curved structure, or a structure in an irregular shape.

In an embodiment, the base material 1 has a flat surface. The reflective graphic 2 is formed on the flat surface. The flat surface may be a plane. Alternatively, the flat surface may be a curved surface. Alternatively, the flat surface may be a combination of a plane and a curved surface. In comparison with the curved surface, arrangement of a flat surface facilitates processing and shaping of the reflective graphic 2.

In an embodiment, the base material 1 uses an overall flat straight plate structure, or has a 3D cover plate structure with specific curvature bends on two sides.

In some embodiments, the base material 1 is selected from a glass substrate or a plastic sheet.

When the base material 1 is selected from the glass substrate, coat the glass surface with photoresist, perform exposure, development, and etching to form a mask with the reflective graphic 2, and then perform wet or dry etching. Because of a protective effect of the photoresist on the glass, an area with thick photoresist resists etching for a long time. An area with thin photoresist resists etching for a short time, and a base glass layer is exposed before that of the area with thick photoresist. Therefore, through appropriate etching time, a texture of the reflective graphic 2 is completely copied to a piece of glass, and through techniques such as film coating, spray coating, or printing, a finished product is produced, that is, a piece of glittering glass with gradient change colors is formed.

When the base material 1 is selected from the plastic sheet, data of the reflective graphic 2 is transferred to a computer, and photolithography exposure is performed on a glass plate with photoresist evenly distributed. After development, drying, and plasma cleaning, ultraviolet (uv) transferring is performed to transfer a texture to a polycarbonate (pc) sheet, and then through uv transferring, the reflective graphic 2 is formed on the plastic sheet. The plastic sheet may be selected from a film-like material or a plate-like material. When the plastic sheet is selected from the film-like material, after film coating, printing, laminating and other techniques, the plastic sheet can be attached to a piece of glass or another base material 1, to be used as a decorative film material. When the plastic sheet is selected from the plate-like material, after hot pressing molding, a finished plastic sheet with the texture may be produced.

According to another embodiment of the present disclosure, an electronic product is provided, including the glitter module described above.

The glitter module is used as a casing or a part of a casing of the electronic product. By using the glitter module, the electronic product can present a light and shade gradient change and a glittering flowing effect on a surface, and has better aesthetics. In addition, a pattern is directly formed from the base material 1. This can effectively avoid a problem that the pattern falls off during use.

In some embodiments, the electronic product is selected from a smart phone or a tablet.

The foregoing descriptions are merely exemplary embodiments of the present disclosure, but are not intended to limit the present disclosure. Any modifications, equivalent substitutions, and improvements made within the spirit and principle of the present disclosure shall fall within the protection scope of the present disclosure.

## Claims

1. A glitter module, comprising a base material (1) and a reflective graphic (2) located on a surface of the base material (1), the reflective graphic (2) comprising a plurality of first-level regions (21), and each first-level region (21) having a plurality of second-level regions;
the second-level region being provided with a plurality of strip-shaped grooves (2111), the plurality of strip-shaped grooves (2111) in a same second-level region being arranged in parallel, and the plurality of strip-shaped grooves (2111) in the same second-level region having a same extension direction;
each first-level region (21) having a specified direction, and an angle between an extension direction of a strip-shaped groove (2111) of a plurality of second-level regions in a same first-level region (21) and a specified direction of a corresponding first-level region (21) ranging from -20° to 20°; and
along a preset direction of the reflective graphic (2), angles between specified directions of the plurality of first-level regions (21) and the preset direction being in a gradient change relationship.

2. The glitter module according to claim 1, wherein the angle between the extension direction of the strip-shaped groove (2111) of the plurality of second-level regions in the same first-level region (21) and the specified direction of the corresponding first-level region (21) ranges from -15° to 15°.

3. The glitter module according to claim 1 or 2, wherein along the preset direction of the reflective graphic (2), the angles between the specified directions of the plurality of first-level regions (21) and the preset direction are in a gradient change between 90° and -90°.

4. The glitter module according to any one of claims 1 to 3, wherein the first-level region (21) is in a shape of an irregular polygon.

5. The glitter module according to any one of claims 1 to 4, wherein the second-level region is in a shape of an irregular polygon or a triangle.

6. The glitter module according to any one of claims 1 to 5, wherein in the same first-level region (21), the plurality of second-level regions are in puzzle-like splicing distribution or dot matrix spacing distribution.

7. The glitter module according to any one of claims 1 to 6, wherein a spacing between the plurality of strip-shaped grooves (2111) in the same second-level region ranges from 0 µm to 50 µm, a width of the strip-shaped groove (2111) ranges from 10 µm to 50 µm, and a depth of the strip-shaped groove (2111) ranges from 0.5 µm to 10 µm.

8. The glitter module according to any one of claims 1 to 7, wherein the second-level region is provided with a plurality of strip-shaped protrusions (2112), the plurality of strip-shaped protrusions (2112) being arranged in parallel, a single strip-shaped groove (2111) being formed between two adjacent strip-shaped protrusions (2112), a width of the strip-shaped protrusion (2112) ranging from 10 µm to 50 µm, a height of the strip-shaped protrusion (2112) ranging from 0.5 µm to 10 µm, and a spacing between the two adjacent strip-shaped protrusions (2112) ranging from 0 µm to 50 µm.

9. The glitter module according to any one of claims 1 to 8, wherein the base material (1) is selected from a glass substrate or a plastic sheet.

10. An electronic product, comprising the glitter module according to any one of claims 1 to 9.
